# EUROPEAN PATENT SPECIFICATION

(11) **EP 0 765 780 B1**
(45) Date of publication and mention of the grant of the patent: **10.02.1999**
(21) Application number: 95115391.5
(22) Date of filing: 29.09.1995
(51) Int. Cl.: B60R 21/18, B60R 21/32

(54) **Safety belt combined with air bags**
Sicherheitsgurt, kombiniert mit Luftsäcken
Ceinture de sécurité combinée à des sacs gonflables

(43) Date of publication of application: 02.04.1997
(73) Proprietor: Russo, Salvatore, 10100 Torino (IT); Zavatta, Renzo, 47100 Forli (IT)
(72) Inventor: Russo, Salvatore, 10100 Torino (IT); Zavatta, Renzo, 47100 Forli (IT)
(74) Representative: Rinaldi, Carlo

(56) References cited:
- EP-A- 0 652 140
- DE-A- 4 211 209
- DE-A- 4 305 505
- US-A- 4 346 914
- US-A- 5 062 662
- US-A- 5 333 902

## Description

The present invention relates to a safety belt for auto-vehicles to which a plurality of air bags is associated, said plurality of air bags cooperating with the same belt to improve the protection of the passengers from the devastating effects of the road accidents.

At present auto-vehicles are fitted with safety belts and air bags.
The safety belts fasten the body of the passenger to the seat of the auto-vehicle to prevent the effects of the inertia which acts on the body during an impact of the auto-vehicle against a rigid obstacle or a telescoping. The belts are used for preventing the body from colliding against the windscreen (or similar rigid obstacle which is in the internal part of the vehicle) or from being ejected from the vehicle if the doors open suddenly.

The air bags have the same scope as that of the safety belts; in addition they are used for deadening the impact of the body of the passenger against the windscreen, since they are intruded between the passenger and the obstacle as a cushion filled with gas so as to dissipate the kinetic energy of the body of the passenger by means of their deformation; otherwise said kinetic energy would be dissipated by a fracture or a serious lesion of the same body.

At present the safety belts and the air bags are mounted on the auto-vehicle separately, for this reason it is not possible to define any synergy among the advantageous effects of these devices of safety; therefore each of these devices operates without considering the operation of the other. This lack of synergy is the cause for the low efficacy in the protection of the passenger; in particular during the accidents at moderate velocity the kinetic energy is dissipated by the belt nearly completely, but during the accidents at high velocity the kinetic energy is dissipated by the air bag nearly completely; for this reason the belt can be inefficient or even the cause for damage. In addition, in the case of telescoping or lateral impacts the traditional air bag do not swell.

A second air bag was suggested being mounted between the passenger and the door since said belt is capable of preventing the passenger from being ejected from the vehicle; the second air bag increases the probability of maintaining the passenger in the vehicle if the doors open because of an accident.

The purpose of the present invention is to remedy these defects. The invention, as claimed, solves the problem of creating a safety belt combined with air bags; by means of the invention the result of combining the functions of the belt with those of an air bag (or air bags) is achieved to assure the passengers and/or the driver a higher probability of preventing serious lesions even in the case of accidents at high velocity, since the inflation of the air bag (or of the air bags) is due to the sudden acceleration of the vehicle owing to a lateral or frontal impact or a telescoping. A safety belt with air bags is known, e.g. from EP-A-0 652 140.

The advantages offered by the present invention are mainly that the safety belt supports a plurality of air bags which are inflated when the positive or negative acceleration of the vehicle exceeds a pre-established intensity indicating an accident with certainty. In addition, in the case of a lateral impact or a telescoping the air bags swell because of said acceleration.

According to the invention, the safety belt combined with air bags comprises a male connection which is capable of being inserted in a female connection fastened to the internal part of the floor of the vehicle; the belt consisting of at least one layer of suitable material; said layer houses at least one pipe which extends longitudinally in the internal part of the layer and connects a bottle for a compressed gas to a plurality of air bags; a plurality of housings for said air bags adhering to the side of the belt which is faced towards the external part of the body of the passenger and/or the driver, each of said housings presenting a wall with low mechanical resistance through which said air bags protrude when inflated; sensors of impact are further provided to indicate an impact of the vehicle, said sensors indicate a frontal or lateral impact or a telescoping and control electrical contacts to send a signal to a solenoid valve in order to control the outlet valve of the bottle for the compressed gas to be sent to the air bags.

Other advantages, features and aims of the invention, may be more readily understood by referring to the accompanying drawings, which concern preferred embodiments, in which:
- Fig.1: represents a connecting branch of a belt according to the invention;
- Fig.2: represents a sectional view of the belt in a different scale;

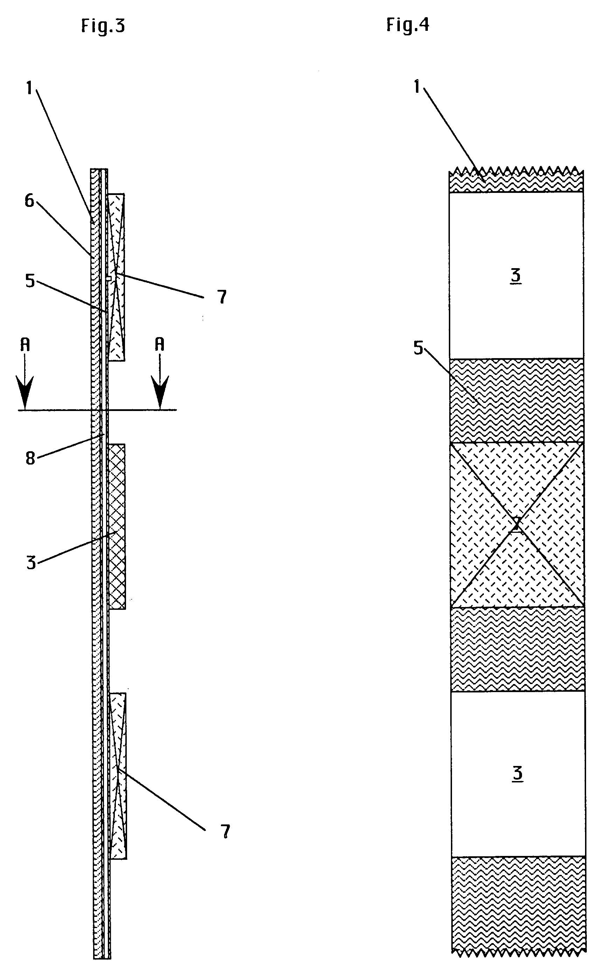

- Fig.3: is longitudinal sectional view of the belt in a first embodiment;
- Fig.4: is a top view of the belt of Fig.3;
- Fig.5: is a longitudinal sectional view of the belt of Fig.3 after the inflation of the air bags;
- Fig.6: is a top view of the belt of Fig.3 after the inflation of the air bags;
- Fig.7: is a longitudinal sectional view of the belt in a second embodiment after the inflation of the air bags;
- Fig.8: is a top view of the belt of Fig.7 after the inflation of the air bags;

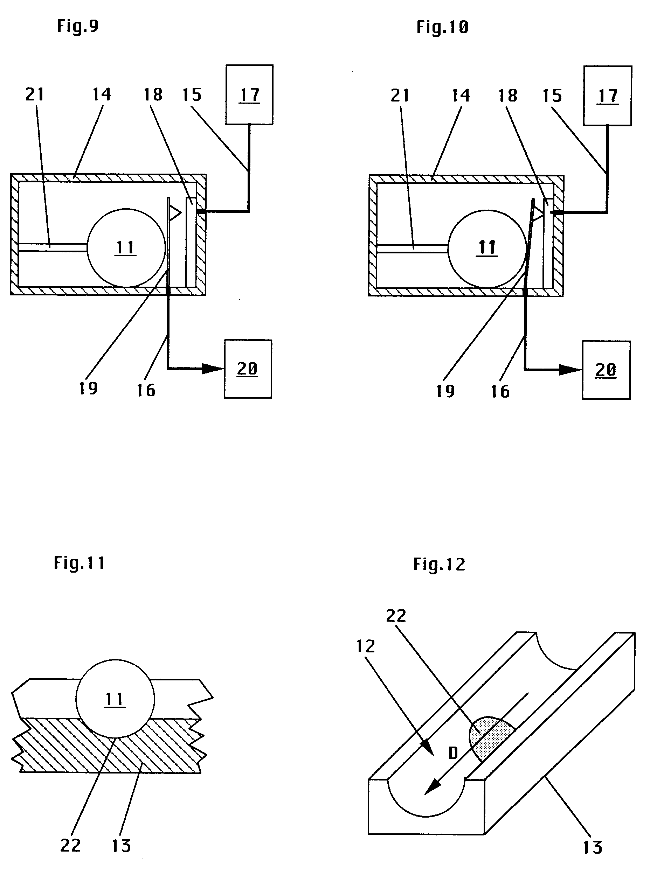

- Fig.9: is a sectional view of a device sensing impacts with inertial working with the mass in a first position;
- Fig.10: is a sectional view of the device of Fig.9 with the mass in a second position;
- Fig.11: is a sectional view of a first particular of the device of Fig.9;
- Fig.12: is a perspective of a second particular of the device of Fig.9;
- Fig.13: represents a first connection of a belt according to the invention to which no forces are applied;
- Fig.14: represents the connection of Fig.13 to which forces of traction of the hand of the driver or of the passenger are applied;
- Fig.15: represents the connection of the belt of Fig.13 to which forces of traction are applied owing to the inertia of the body of the driver or of the passenger in the case of an accident;
- Fig.16: represents schematically the feeding circuit of a solenoid valve which closes or opens the outlet valve of a bottle containing the compressed gas to be sent to the air bag;
- Fig.17: represents a control device of the solenoid valve in the closing condition of the outlet valve of the bottle;
- Fig.18: represents the control device of the solenoid valve in the opening condition of the outlet valve of the bottle;
- Fig.19: is a frontal view of a second connection of a belt according to the invention to which no forces are applied;
- Fig.20: is a frontal view of the connection of Fig.19 to which forces of traction are applied owing to the inertia of the body of the driver or of the passenger in the case of an accident;
- Fig.21: is a lateral view of the connection of Fig.19;
- Fig.22: is a lateral view of the connection of Fig.20;
- Fig.23: represents a third connection of a belt according to the invention to which no forces are applied;
- Fig.24: represents the connection for the belt of Fig.23 to which forces of traction are applied owing to the inertia of the body of the driver or of the passenger in the case of an accident;
- Fig.25: represents a fourth connection of a belt according to the invention to which no forces are applied;
- Fig.26: represents the connection for the belt of Fig.25 to which forces of traction are applied owing to the inertia of the body of the driver or of the passenger in the case of an accident;

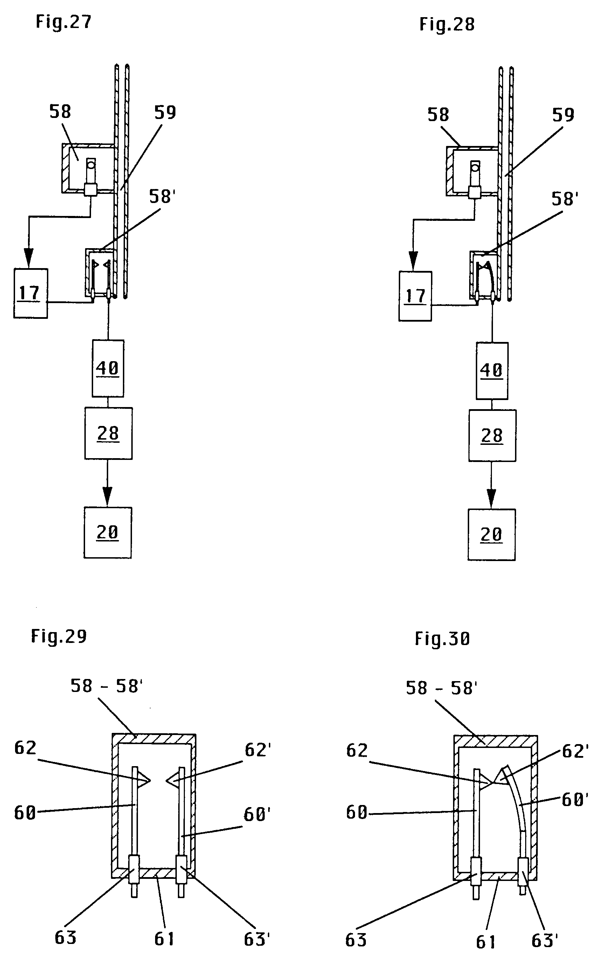

- Fig.27: represents a device sensing impacts using vibration in a first position;
- Fig.28: shows the device of Fig.27 in a second position;
- Fig.29: represents a particular of the device of Fig.27 in an enlarged scale;
- Fig.30: represents a particular of the device of Fig.28 in an enlarged scale.

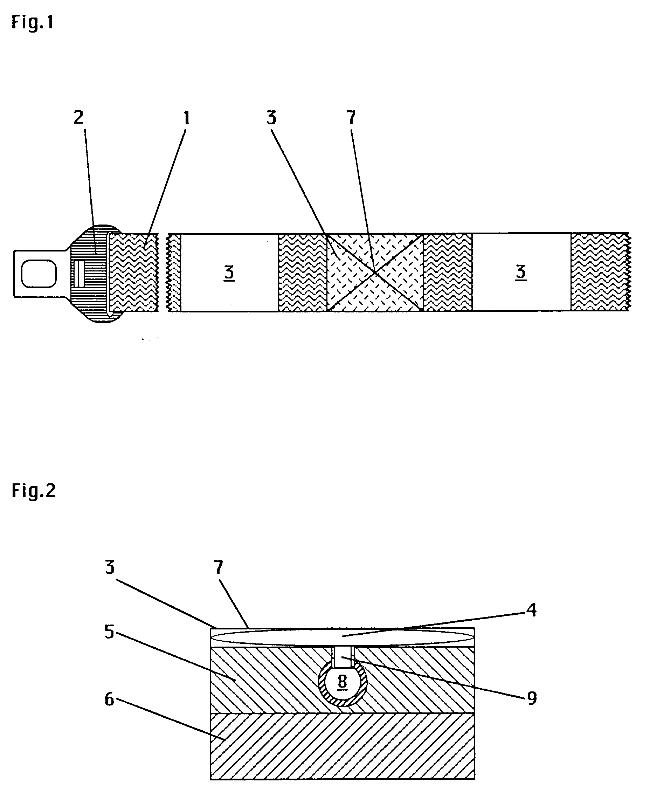

Figs from 1 to 6 represent a first embodiment of a belt 1 in different scales. The belt 1 is fitted with a male connection 2 and presents three housings 3 in the side faced towards the external part of the body of the driver; each of the housings 3 houses an air bag 4 and is fastened to the side of a first layer 5 of suitable material which is opposite to the side of the same layer 5 which adheres to a second layer 6 which is supported by the body of the passenger or the driver. Each of the housings 3 presents a wall with low mechanical resistance 7, through which the air bag 4 protrudes when inflated. The choice of the position of the wall with low resistance 7 allows the air bag 4 to protrude with facility from the housings 3 which house it, and to take a pre-established spatial disposition.
The belt 1 consists of a first 5 and a second 6 mating and parallel layers (Fig.2). The first layer 5 wraps a part of a pipe 8 to send the compressed gas to a plurality of air bags 4 housed in the housings 3. Therefore, the pipe 8 extends longitudinally in the internal part of the first layer 5 which adheres to the second layer 6; in addition the pipe 8 is connected to a plurality of connecting pipes 9, each of which is used for inflating an air bag 4; said pipes 9 cross the first layer 5 in a direction perpendicular to the direction of the pipe 8 and are placed in the internal part of the second layer 5. The second layer 6 is completely identical to the single layer which forms the traditional belts.

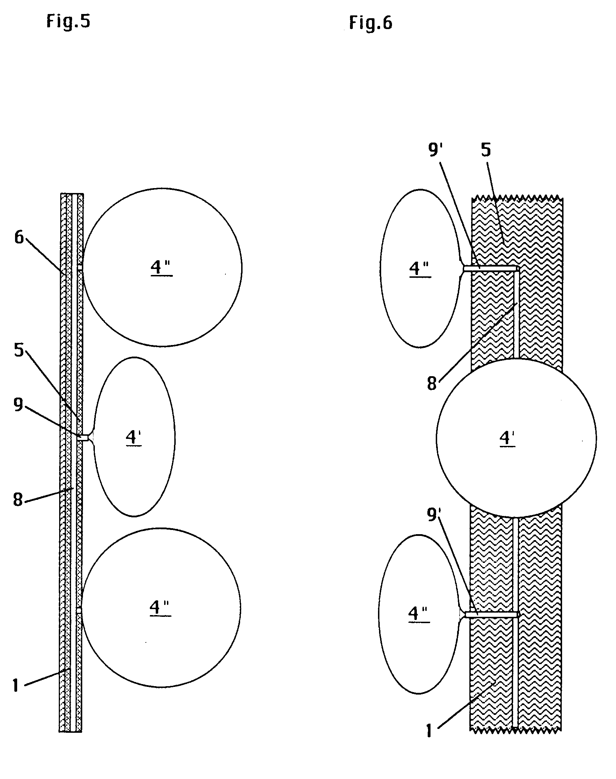

The disposition of the air bags 4 after their inflation is shown in Figs 5 and 6. A first air bag 4' opens in the frontal part and other air bags 4'' open in lateral parts of the belt 1 so as to wrap the body of the passenger (or the driver) completely and to protect it from the effects of the impact.

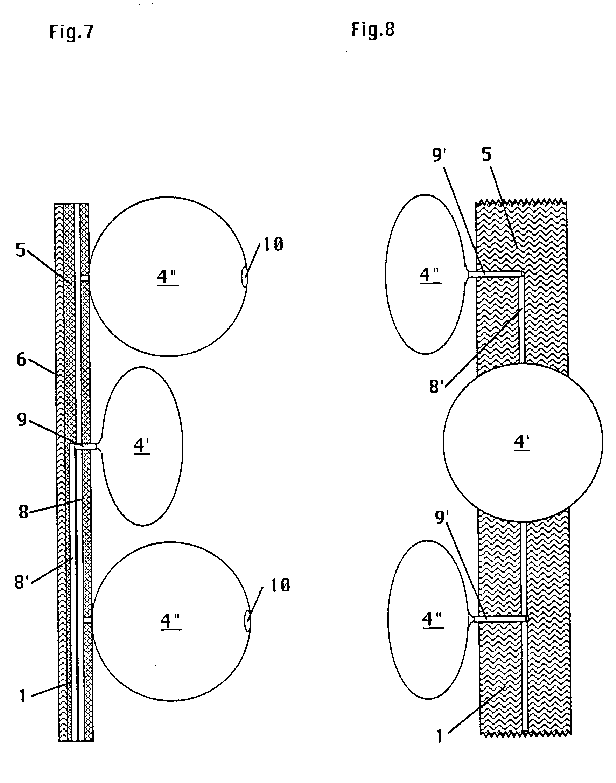

Figs 7 and 8 show a second embodiment of the belt 1. A first air bag 4' opens in the frontal part and is fed by a first pipe 8 connected to a first air bag 4' by means of a first connecting pipe 9; second air bags 4'' open in the lateral parts of the belt 1 and are fed by a second pipe 8' connected to said second air bags 4'' by means of second connecting pipes 9'. The second air bags 4'' are fitted with overflow valves 10 which partially deflate said second air bags 4'' a few instants after the accident so that the driver can see the road and control the drive.

The sensors of impact shown in the figures are so shaped that the solenoid valve does not open the outlet valve of the bottle 37 in the case of sudden acceleration or deceleration owing to manoeuvres of the vehicle or a sudden braking. An acceleration consists of a change of velocity of the vehicle both in intensity and in direction; for this reason a frontal or lateral impact or a telescoping are the cause for a very strong acceleration which is sensed by the sensors of impact described in this text.

Figs from 9 to 12 represent a sensor of impact with inertial working. The sensor presents a ponderous sphere 11 which slides in a groove 12 made in a body 13, the groove 12 defining the direction D of the movement of the sphere 11. The body 13 is housed in a box 14; the body 13 and the box 14 consist of an insulating material and present two holes for two conductors 15 and 16 which connect a battery 17 to a metal plate 18 fastened to an internal wall of the box 14 and an elastic metal thin plate 19 to a solenoid valve 20, respectively. The sphere 11 is held in a first position by an elastic tie rod 21 and by a notch 22 so that the thin plate 19 is detached from the metal plate 18. The notch 22 houses the sphere 11 and defines the position of the sphere 11 during the normal movement of the vehicle to maintain said sphere 11 near the thin plate 19 in order to shorten the operating time on said thin plate 19. The notch 22 establishes a threshold of potential energy which is exceeded by the energy transmitted to the sphere 11 during the accident.

During an impact of the vehicle, the direction D of which has a component in the direction defined by the groove 12, the sphere 11 is stressed by the inertia and comes out of the notch 22; owing to this stress the sphere 11 stresses the elastic tie rod 21 and pushes the thin plate 19 against the plate 18 to close the circuit which connects the battery 17 to the solenoid valve 20.
To sense frontal or lateral impacts or telescoping a plurality of devices shown in Figs from 9 to 12 is used, said devices being oriented in several directions which allow to sense these impacts.

Figs from 13 to 16 represent sensors of impact with inertial working, in which the mass consists of the body of the passenger and/or of the driver.

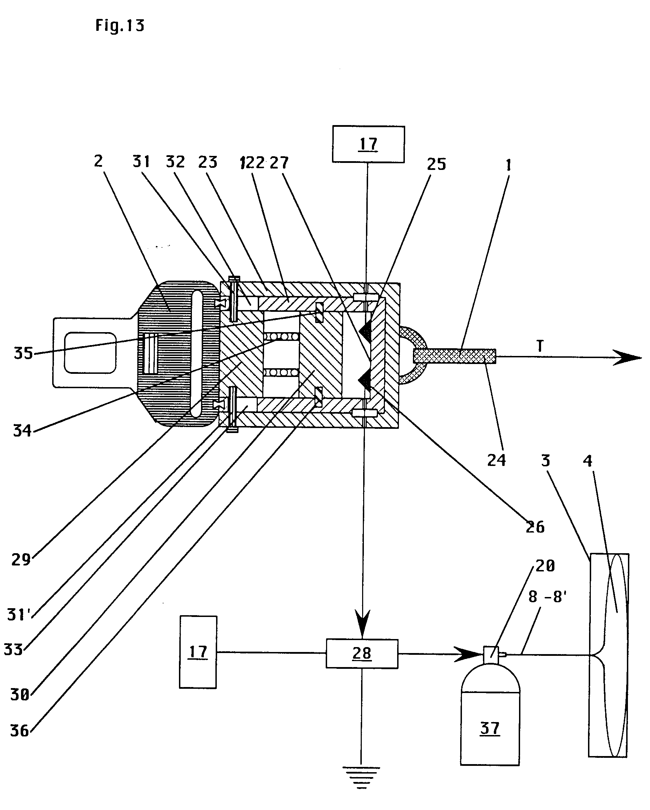

Fig.13 shows schematically the male element connecting the belt to the female element fastened to the internal part of the floor of the vehicle. The structures illustrated in this Figure are used for demonstrating how it is possible to inflate an air bag by using the force of traction T which acts on the branch of the belt fastened to the same male element. The belt 1 is fastened to a bracket 122 on which a sliding sleeve 23 is mounted which is stressed by the force of traction T applied to a branch 24 of the belt 1. Two electrical contacts 25 and 26 adhere to a frontal internal wall 27 of the bracket 122, the first contact 25 is connected to the battery 17 of the vehicle and the second contact 26 is connected to a power stage 28.
In the internal part of the bracket 122 two sliding plates 29 and 30 are placed; the first plate 29 is mechanically connected to the sleeve 23 by connecting means 31 and 31', each of the connecting means 31 and 31' crosses a slot 32, 33 so that the plate 29 moves with the sleeve 23; elastic pushing means 34 are provided between the first plate 29 and the second plate 30.
The solidarity between the second plate 30 and the bracket 122 is due to two pins 35 and 36 which have a pre-established resistance to searing stress.
A battery of accumulators 17 feeds the power stage 28 which is used for supplying the power necessary to energise the solenoid valve 20 which controls the outlet valve of a bottle 37. Said outlet valve controls the flow of the compressed gas to be sent to the air bag 4 (4',4''); for this reason when the solenoid valve 20 is not energised the outlet valve of the bottle 37 is closed and when the solenoid valve 20 is energised the outlet valve of the bottle 37 is open to send the compressed gas to the air bag 4 through the pipe 8. In the bottle 37 a pressure is provided which is sufficiently high to allow the sudden inflation of the air bag 4.

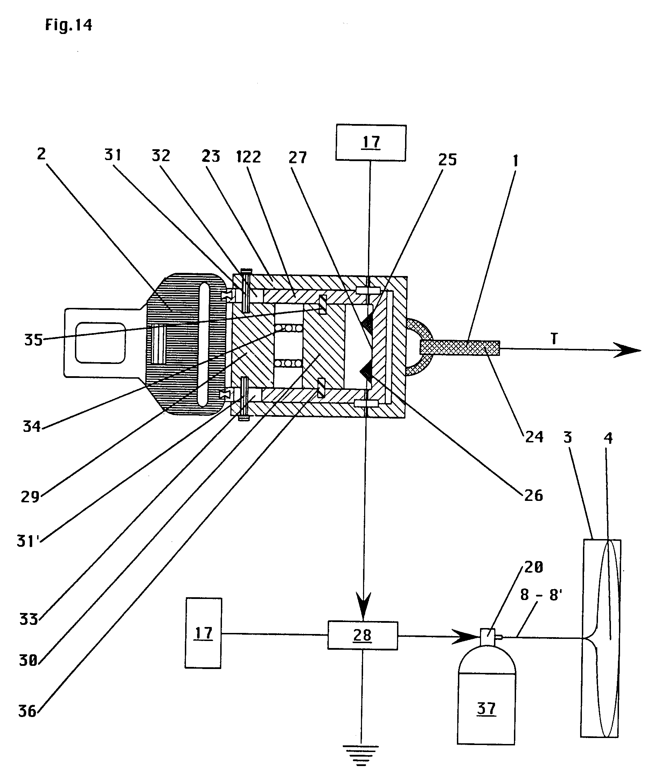

In Fig.14 the same elements are represented as in Fig.13. Forces of traction of the hand of the driver or the passenger were applied to the sensor of impact; therefore, a little displacement (towards right) of the sleeve 23, of the connecting means 31, 31' in the slots 32, 33 and of the first plate 29 has taken place; however, the forces of traction T are too weak to break the pins 35 and 36; for this reason the pins 35 and 36 limit the movement of the first plate 29 with respect to the second plate 30.

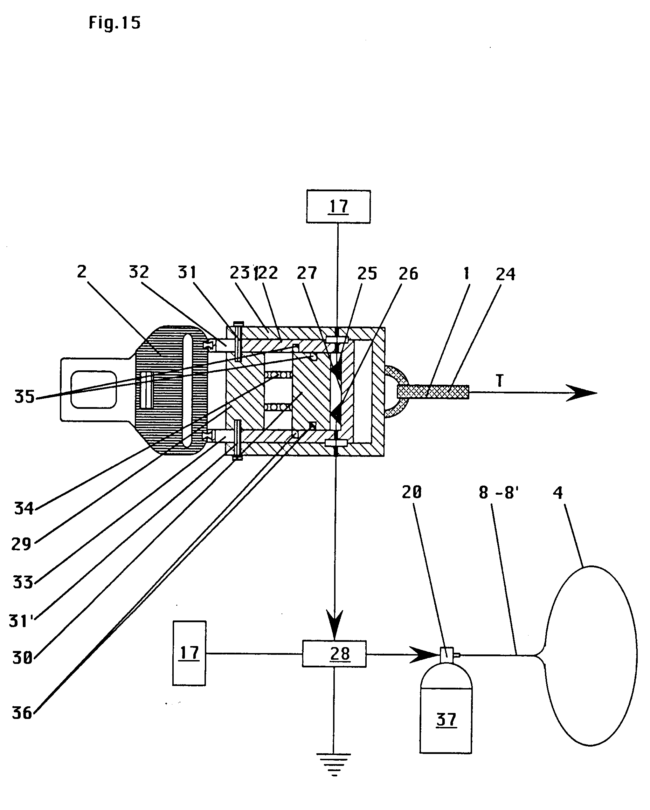

The breaking of the pins 35 and 36 takes place in the configuration of Fig.15 in which the connection of the belt 1 is stressed by forces of traction T owing to the inertia of the body of the driver or of the passenger during a lateral or frontal impact or a telescoping. In this case the forces of traction T reach very high values, since the vehicle is subjected to a sudden change of velocity; in fact the acceleration which stresses the body becomes a very high multiple of the acceleration of gravity and transmits a force to the same body by means of which the branch 24 is stressed very strongly. Owing to this high value of the forces of traction T, the elastic pushing means 34 moved by the first plate 29 transmit to the second plate 30 a force, the intensity of which is equal to the forces of traction T for this event; consequently, the pins 35 and 36, which have a pre-established resistance to the searing stress, break. The plate 29 keeps pushing the plate 30 through the elastic pushing means 34 until the plate 30 touches the electrical contacts 25 and 26. The circuit which feeds the solenoid valve 20 closes and the energised solenoid valve 20 opens the outlet valve of the bottle 37 to send the compressed gas to the air bag 4 (4',4'') through the pipe 8 (or 8').
As consequence of the shearing, a part of the pins 35 and 36 remains in the bracket 122 and a part in the second plate 30.

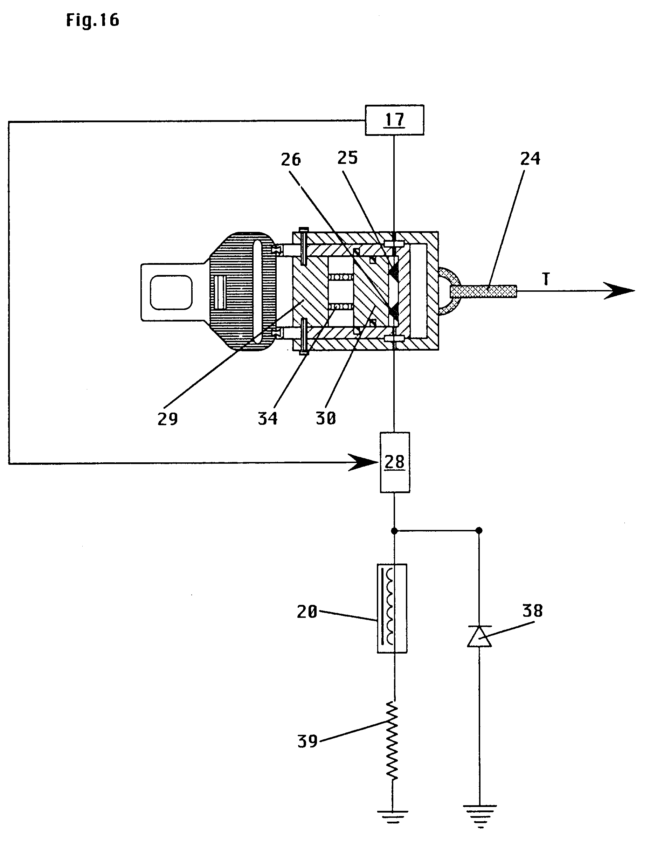

Fig.16 discloses a synthesis of the previous description. In Fig.16 the same elements of Figs 13, 14 and 15 are represented, but the solenoid valve 20 presents a more real aspect. The solenoid valve 20 is fed by the power stage 28, for this reason it is earthed by means of a resistance 39, and a diode 38 prevents extra-currents at the start of the energising of the solenoid valve 20 so that no sparking, which is very dangerous in these difficult situations, occurs.

A sensor of impact was created which acts on the solenoid valve 20 in function of the inertial movement of the driver and/or the passenger with respect to the vehicle; this sensor of impact is capable of sensing the sudden and very high changes of velocity (both in direction and intensity) of the vehicle owing to an accident by using the body of the driver and/or of the passenger as inertial mass which generates a force equal to the product of the same mass by acceleration, in accordance with the first law of the dynamic.

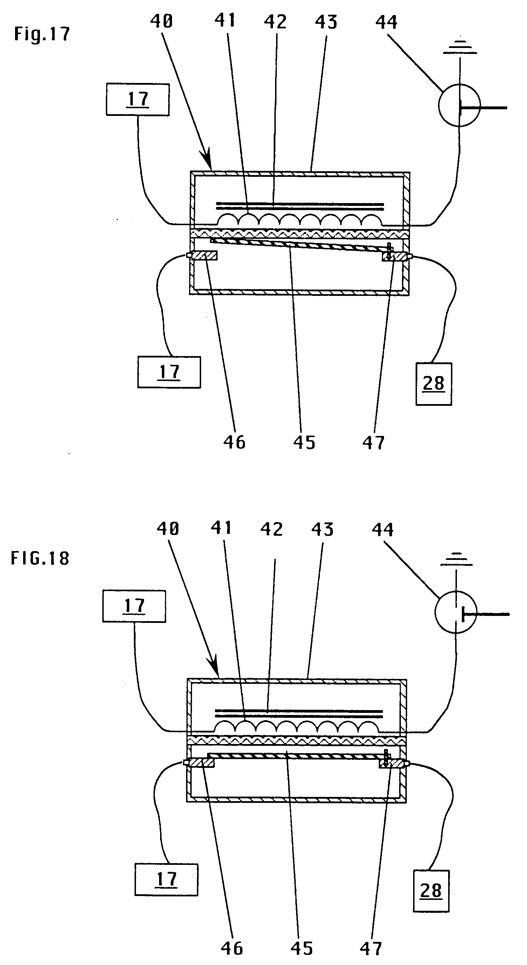

In Figs 17 and 18 a control device 40 is represented which is used for closing or opening the solenoid valve 20. The device 40 is substantially a relay which energises the solenoid valve 20 when one of the devices shown in the Figs from 19 to 26 is used. If the battery 17 is sufficiently powerful, the use of the power stage 28 is not necessary. A solenoid 41 associated with an air gap 42 is housed in a box 43 and energised by the current coming from the battery 17. As shown in Fig.17, when a switch 44 is closed, the energised solenoid 41 opens a movable armature 45 which is between a first contact 46 and a second contact 47; in this way the current coming from the battery 17 does not feed the power stage 28 and the solenoid valve 20.

As shown in Fig.18, when the switch 44 is open the solenoid 41 is not energised and the movable armature 45 connects the first contact 46 to the second contact 47; in this way the current coming from the battery 17 feeds the power stage 28 and the solenoid valve 20 or the solenoid valve 20 directly.

With the device of Figs 17 and 18 it is possible to control the solenoid valve 20 by means of a system of electrical contacts which disjoint because of the forces of traction T which act on the belt 1 during an accident. The solenoid valve 20 closes the outlet valve of the bottle 37 when energised and opens the outlet valve of the bottle 37 when not energised; in absence of the device 40 the opening of the outlet valve of the bottle 37 takes place when the battery 17 is disconnected for a check up of the electrical feeding system of the engine with consequent sending of the compressed gas to the air bag 4 through the pipe 8.

Figs from 19 to 22 and from 25 to 26 show the male connection 2 which connects the belt 1 to the female element 48 fastened to the internal part of the floor of the vehicle. These Figures represent the switch 44 of Figs 17 and 18.

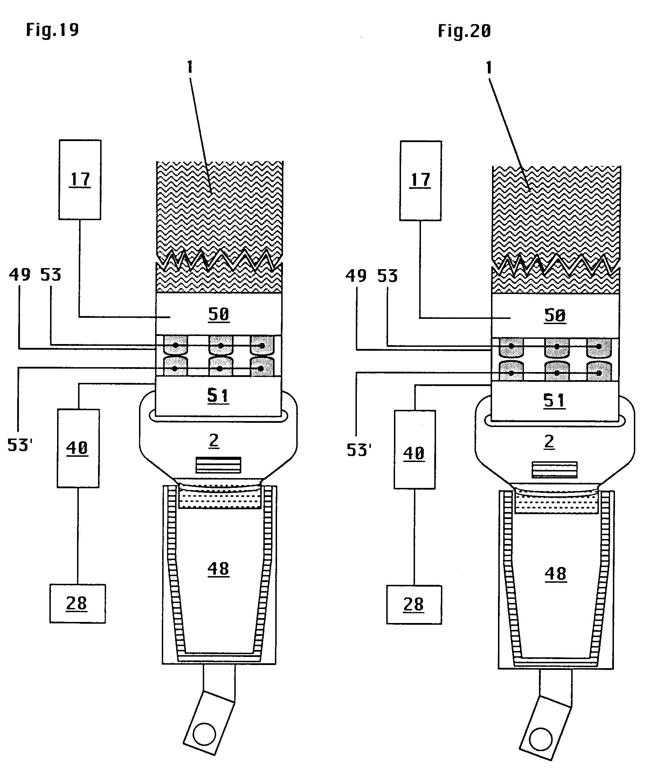

In Figs 19, 20, 21 and 22 the belt 1 is connected to the male connection 2 through a connecting bracket 49 which is so shaped to lengthen in consequence of a traction T of the belt owing to a lateral or frontal impact or a telescoping.

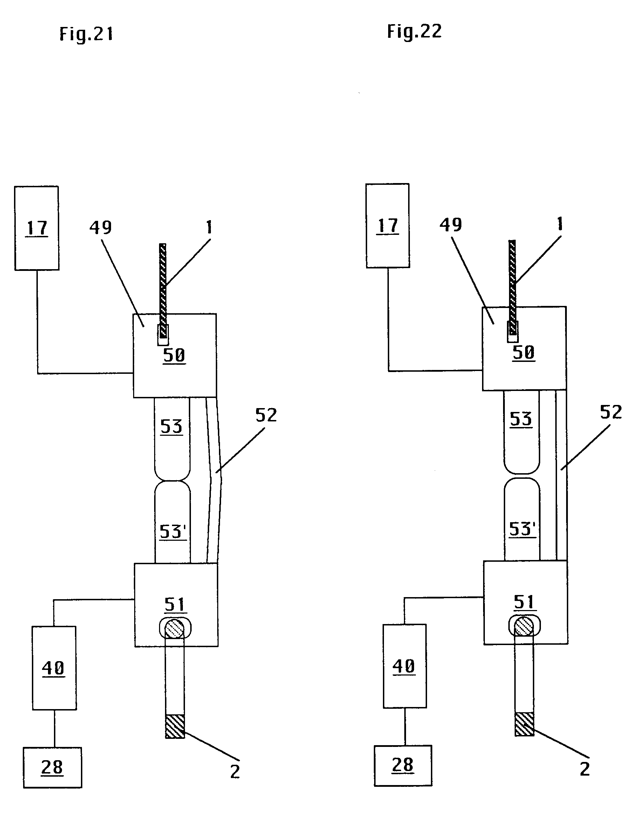

The bracket 49 presents an upper part 50 connected to the belt 1 and a lower part 51 connected to the male connection 2; both upper 50 and lower 51 parts consist of a metal material capable of conducing and are connected each other by means of a bent slab 52 of plastic material which does not conduce and presents a high mechanical resistance. Three magnets 53 are integral with the upper part 50 and three magnets 53' are integral with the lower part 51. The free ends of the magnets 53 and 53' are in contact with each other to cooperate with the bent slab 52 to stand the stresses of low intensity which take place when the belt 1 is manoeuvred by the driver or the passenger. In addition, the magnets 53 and 53', when in contact, assure the conduction of the electrical energy from the upper part 50, connected to the battery 17, to the lower part 51, connected to the switch 44 of the device 40 represented in Figs 17 and 18. Owing to a stress of high intensity due to a lateral or frontal impact or a telescoping, the bent slab 52 lengthens and takes the form shown in Fig.22, for this reason, the upper part 50 and the lower part 51 disjoint and move with the relevant magnets 53 and 53'. The free ends of the magnets 53 and 53' are no longer in contact; therefore the movable armature 45 of the device 40 is placed so as to connect the first contact 46 to the second contact 47 so that the current coming from the battery 17 may feed the power stage 28 and the solenoid valve 20 or the solenoid valve 20 directly; the compressed gas of the bottle 37 suddenly inflates the air bag 4. To perform these functions the slab 52 must be shape-retaining if stressed by a manoeuvre of the belt 1 and capable of warping because of the stresses owing to an impact.

The slab 52 of Figs 21 and 22 is bent to allow its elongation when it is stressed by the traction T. Such an elongation may be achieved by using a slab (not shown) consisting of a material which has a suitable modulus of elasticity.

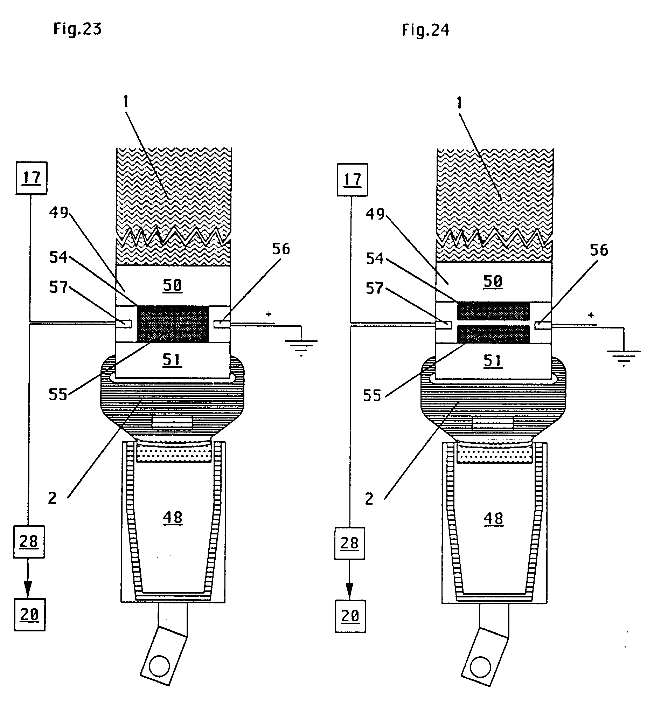

Figs 23 and 24 represent a third connection of a belt 1 stressed by a moderate traction and by a traction due to an impact, respectively. The belt 1 is connected to the male connection 2 by means of a connecting bracket 49 which is so shaped to lengthen in consequence of a traction of the belt owing to a lateral or frontal impact or a telescoping.
The bracket 49 presents an upper part 50 connected to the belt 1 and a lower part 51 connected to the male connection 2; both upper 50 and lower 51 parts are connected to each other by a bent slab 52 consisting of a material with high mechanical resistance (see Figs 21 and 22). A first shield 54 is integral with the upper part 50 and a second shield 55 is integral with the lower part 51. The free ends of the shields 54 and 55 are in contact to prevent a beam of light (visible or of a different frequency) from passing from a sender 56 to a receiver 57. Owing to a stress of high intensity due to a lateral or frontal impact or a telescoping, the bent slab 52 lengthens and takes the form shown in Fig.22; consequently the upper part 50 and the lower part 51 disjoint and move with the relevant shields 54 and 55. The free ends of the shields 54 and 55 are no longer in contact and the receiver 57 receives the light from the sender 56 and starts to conduce so that the current coming from the battery 17 feeds the power stage 28 and the solenoid valve 20, and the compressed gas from the bottle 37 inflates the air bag 4 suddenly.

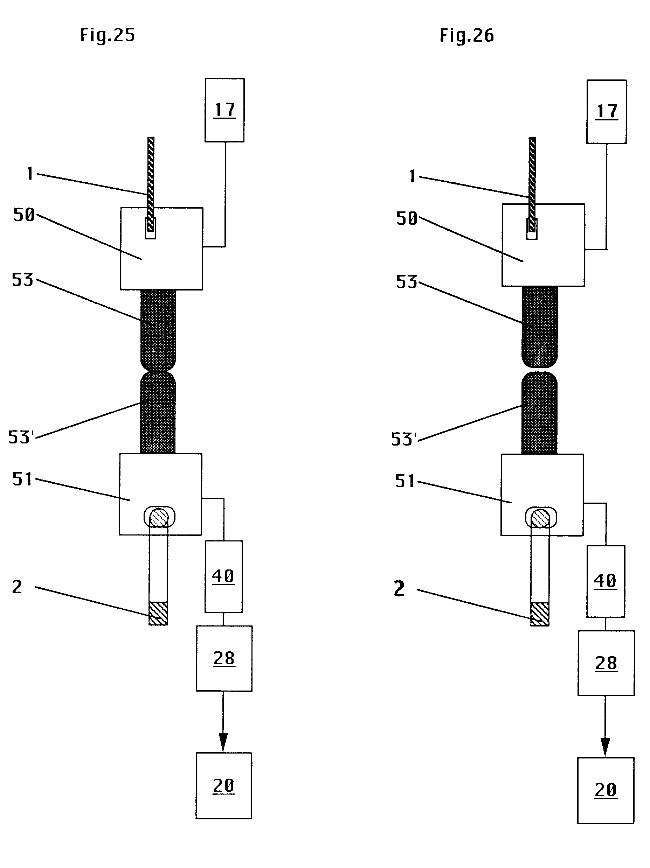

Figs 25 and 26 represent a fourth connection of a belt 1 stressed by a very moderate traction and by a traction due to an impact, respectively. The connection presents an upper part 50, connected to the belt 1 and a lower part 51 connected to the male connection 2. The connection of both upper 50 and lower 51 parts is due to two magnets 53 and 53' fastened to the upper part 50 and lower 51, respectively. The free ends of the magnets 53 and 53' are in contact with each other to stand the stresses of low intensity which take place when the belt 1 is manoeuvred by the driver or the passenger. In addition, the magnets 53 and 53', when in contact, assure the conduction of the electrical energy from the upper part 50, connected to the battery 17, to the lower part 51, connected to the device 40 represented in Figs 17 and 18. Owing to a stress of high intensity due to a lateral or frontal impact or a telescoping the magnets 53 and 53' disjoint and move with the relevant upper 50 and lower 51 parts. The free ends of the magnets 53 and 53' are no longer in contact and the movable armature 45 of the device 40 is placed so as to connect the first contact 46 to the second contact 47 so that the current coming from the battery 17 can feed the power stage 28 and the solenoid valve 20 or the solenoid valve 20 directly. The compressed gas of the bottle 37 inflates the air bag 4 suddenly.

Figs from 27 to 30 represent a sensor of impact which uses vibration to sense frontal or lateral impacts or telescoping. This device consists of two boxes 58 and 58' fastened to the bodywork 59 of the auto-vehicle (for example to the vertical rod of a door). The box 58 is used for sensing the lateral impacts and the box 58' is used for sensing the frontal impacts or the telescoping. In the internal part of the box 58 (or 58') two elastic tangs 60 and 60' are provided which are supported overhanging by the lower wall 61 of the box 58 (or 58'); at the ends of the elastic tangs 60 and 60' electrical contacts 62 and 62' are provided which are used for closing the circuit which connects the battery 17 to the solenoid valve 20, the elastic tangs 60 and 60' consisting of a conductor of electricity. Insulators 63 and 63' are further provided to insulate the elastic tangs 60 and 60' from the wall 61 of the box 58 (or 58').
The tang 60 or 60' forms a system capable of oscillating if stressed by a vibratory movement, the intensity of which exceeds a pre-established threshold. The oscillations take place in a plane parallel to the narrow section of the tang 60 or 60'; when a frontal or lateral impact or a telescoping causes a shock wave which propagates in the bodywork, the amplitude of the oscillations is sufficient to bring the contact 62 to the contact 62' so as to close the circuit connecting the battery 17 to the solenoid valve 20 to inflate the air bags 4.
To sense frontal or lateral impacts or telescoping a plurality of the devices shown in Figs from 27, to 30 is used.
It is also possible to use devices as these shown in Figs from 27, to 30, in which the contacts 62 and 62' touch during the normal movement of the vehicle, and are separated in consequence of an impact; in this case a device is used as that shown in Figs 17 and 18, by means of which it is possible to control the solenoid valve 20 by a system of contacts which disjoint because of the forces induced by the vibrations on the elastic tangs 60 and 60' during an accident and if the solenoid valve 20 closes the outlet valve of the bottle 37 when energised and opens said valve when not energised (or vice-versa).
In an embodiment (not shown) the belt 1 consists of a single layer of a suitable material which wraps the pipe 8 longitudinally and which supports a plurality of housings or boxes 3 for the air bags 4 on the side which is faced towards the external part of the body of the passenger and/or of the driver after the unwinding of the belt 1.

In another embodiment (not shown) a circuit with electronic components (diodes, transistors or the like) is used for performing the same functions of the circuit represented in Figs 17 and 18.

## Claims

1. Safety belt combined with air bags, comprising a male connection (2) which is capable of being inserted in a female connection (48) fastened to the internal part of the floor of the vehicle, said belt (1) consisting of at least one layer (5,6) of suitable material being characterised by the fact that said layer (5,6) wraps at least one pipe (8) which extends longitudinally in the internal part of the layer (5,6) and which connects a bottle for a compressed gas (37) to a plurality of air bags (4,4',4''); a plurality of housings (3) for said air bags (4,4',4'') adhering to the side of the belt (1) which is faced towards the external part of the body of the passenger and/or the driver, each of said housings (3) presenting a wall with low mechanical resistance (7) through which said air bags (4,4',4'') protrude when inflated; sensors of impact are further provided to sense an impact of the vehicle, said sensors sensing a frontal or lateral impact or a telescoping and controlling electrical contacts to send a signal to a solenoid valve (20) in order to act on the outlet valve of the bottle (37) containing the compressed gas to be sent to the air bags (4,4',4'').

2. Safety belt as in claim 1, characterised by the fact that a first air bag (4'), which opens in the frontal part of the belt (1), is fed by a first pipe (8) through first connecting pipes (9); second air bags (4'') being provided, which open in the lateral parts of the belt (1), and are fed by a second pipe (8') through second connecting pipes (9').

3. Safety belt as in claim 2, characterised by the fact that the second air bags (4'') are fitted with overflow valves (10) which partially deflate said second air bags (4'') a few instants after the impact so that to the driver can see the road and control the drive.

4. Safety belt as in claim 1, characterised by the fact that the sensors of impact consist of an inertial mass which acts on one of said electrical contacts to send said signal to said solenoid valve (20) when the vehicle is subjected to an acceleration due to an accident.

5. Safety belt as in claim 4, characterised by the fact that the inertial mass consists of a ponderous sphere (11) which is held in a notch (22), and is capable of sliding in a groove (12) which defines the direction (D) of the movement of the sphere (11); two metal elastic plates (18,19) being provided to close the circuit which connects the battery (17) to the solenoid valve (20), when the sphere (11), subjected to an inertial force during an accident, comes out of the notch (22) and is pushed towards the first plate (19) in order to obtain the contact between the second plate (18) and the first plate (19).

6. Safety belt as in claim 4, characterised by the fact that the inertial mass consists of the body of the driver and/or of the passenger, which is held by the belt (1) on the seat of the vehicle; during an impact said body being capable of stressing the belt (1) by means of a force of traction (T) which acts on a sensor of impact to send said signal to said solenoid valve (20); said sensor of impact being made by a first element integral with the male connection (2) and by a second element integral with the belt (1); said first and second elements moving the one with respect to the other when stressed by the force (T) to act on electrical contacts which close the circuit connecting the battery (17) to the solenoid valve (20).

7. Safety belt as in claim 6, characterised by the fact that the second element, which is integral with the belt (1), when stressed by said force (T), detaches from the first element integral with the male connection (2); a device (40) being provided to send said signal to said solenoid valve (20) when the second element is detached from the first element.

8. Safety belt as in claim 7, characterised by the fact that the sensor of impact comprises a connecting bracket (49) which loses its shape when is subjected to said force (T) and an element capable of sensing said deformation; said element consisting of magnets (53,53'), shields (54,55), or a circuit with photo-sensible elements controlling said solenoid valve (20).

9. Safety belt as in claim 6, characterised by the fact that the sensor of impact comprises elements (35,36) limiting the movement of the first element integral with the male connection (2) with respect to the second element integral with the belt (1), when stressed by the hand of the driver or of the passenger; said first and second elements (35,36) presenting a pre-established resistance to the searing stress.

10. Safety belt as in claim 1, characterised by the fact that the sensors of impact consist of a system capable of oscillating when stressed by a vibratory movement, the intensity of which exceeds a pre-established threshold, said system controlling said solenoid valve (20) to send said signal when the oscillations are due to a shock wave which propagates in the bodywork of the vehicle in consequence of an impact.

## Patentansprüche

1. Sicherheitsgurt, kombiniert mit Luftsäcken, die folgende Glieder umfaßt:
einen männlichen Anschluß (2), der geeignet ist, in einen am Inneren des Fußbodens des Fahrzeuges befestigten weiblichen Anschluß (48) eingesetzt zu werden; wobei der Sicherheitsgurt (1) zumindest aus einer Schicht (5,6) aus dazu passendem Stoff besteht;
wobei der Sicherheitsgurt (1) dadurch gekennzeichnet ist, daß die Schicht (5,6) zumindest eine Leitung (8) enthält, welche sich längs dem Inneren der Schicht (5,6) erweitert, und wobei die Leitung (8) eine Flasche für komprimiertes Gas (37) mit einer Mehrheit an Luftsäcken (4,4',4'') verbindet;
eine Mehrheit an Behältern (3) für die Luftsäcke (4,4',4'') klebt an der Seite des Sicherheitsgurts (1), die auf das Äußere des Reisenden und/oder des Fahrers gerichtet ist, wobei jeder der Behälter (3) eine Wand (7) mit niedriger mechanischer Festigkeit aufweist, durch welche die aufgeblasenen Luftsäcke (4,4',4'') hervorstehen; außerdem, sind Zusammenstoßfühler vorgesehen, die einen Zusammenstoß des Fahrzeuges fühlen; die Fühler fühlen einen Stirn- oder Sietenzusammenstoß oder ein Anrammen, wobei die Zusammenstoßfühler elektrische Kontakte steuern, um ein Signal zu einem Magnetventil (20) zu senden, damit das Ablaßventil der Flasche (37) für das zu den Luftsäcken (4,4',4'') zu sendende komprimiertes Gas geöffnet wird.

2. Sicherheitsgurt nach Anspruch 1 dadurch gekennzeichnet, daß ein erster Luftsack (4'), der sich im Stirnteil des Sicherheitsgurts (1) öffnet, durch einer ersten Leitung (8) über ersten Verbindungsröhren (9) gespeist wird, und daß zweite Luftsäcke (4''), die sich in den seitlichen Teilen des Sicherheitsgurts (1) öffnen, durch einer zweiten Leitung (8') über zweiten Verbindungsröhren (9') gespeist werden.

3. Sicherheitsgurt nach Anspruch 2 dadurch gekennzeichnet, daß die zweiten Luftsäcke (4'') mit Auslassventilen (10) ausgestattet sind, welche die zweiten Luftsäcke (4'') teilweise einige Augenblicke nach dem Zusammenstoß entlüften, damit der Fahrer die Straße sehen und das Fahren steuern kann.

4. Sicherheitsgurt nach Anspruch 1 dadurch gekennzeichnet, daß die Zusammenstoßfühler aus einer Trägheitsmasse bestehen, die auf einem der elektrischen Kontakte wirkt, um das Signal zum Magnetventil (20) zu senden, when der Fahrzeug einer Beschleunigung wegen eines Unfalles unteworfen wird.

5. Sicherheitsgurt nach Anspruch 4 dadurch gekennzeichnet, daß die Trägheitsmasse aus einer massigen Kugel (11) besteht, die in einer Kerbe (22) angehalten wird, wobei die Kugel (11) in einer Kehle (12) läuft, welche die Richtung der Bewegung (D) der Kugel (11) bestimmt; zwei elastische Metallplatten (18,19) dienen zum Schließen des Kreises, der die Batterie (17) mit dem Magnetventil (20) verbindet, falls die einer Trägheitskraft wegen eines Unfalles unteworfene Kugel (11) aus der Kerbe (22) herauskommt und zur ersten Platte gestoßen wird (19), damit die Berührung zwischen der zweiten Platte (18) und der ersten Platte (19) erreicht wird.

6. Sicherheitsgurt nach Anspruch 4 dadurch gekennzeichnet, daß die Trägheitsmasse aus dem Körper des Fahrers und/oder des Reisenden besteht, der durch den Sicherheitsgurt (1) auf dem Sitz des Fahrzeuges gehalten wird; während eines Unfalles ist der Körper geeignet, den Sicherheitsgurt (1) mit einer Zugkraft (T) zu spannen, die auf einem Zusammenstoßfühler wirkt, um das Signal zum Magnetventil (20) zu senden; wobei der Zusammenstoßfühler aus einem an dem männlichen Anschluß (2) befestigten ersten Element und aus einem an dem Sicherheitsgurt (1) befestigten zweiten Element besteht, wobei sich jeder der Elemente wegen der Zugkraft (T) hinsichtlich des zweites bewegt, um auf elektrischen Kontakten zu wirken, die den die Batterie (17) mit dem Magnetventil (20) anschliessenden Kreis schließen.

7. Sicherheitsgurt nach Anspruch 6 dadurch gekennzeichnet, daß sich der an dem Sicherheitsgurt (1) befestigten zweiten Element von dem an dem männlichen Anschluß (2) befestigten ersten Element wegen der Zugkraft (T) entfernet; wobei eine Vorrichtung (40) vorgesehen ist, um das Signal zum Magnetventil (20) zu senden, falls der zweite Element vom ersten Element entfernt ist.

8. Sicherheitsgurt nach la Anspruch 7, gekennzeichnet dadurch daß der Zusammenstoßfühler einen Verbindungsbügel (49) umfaßt, der sich wegen der Zugkraft (T) verformt, sowie eine Vorrichtung zum Fühlen die Verformung; wobei die Vorrichtung aus Magneten (53,53'), aus Schirmen (54,55) eines Steuerkreises des Magnetventils (20) mit lichtempfindlichen Elementen besteht.

9. Sicherheitsgurt nach Anspruch 6 dadurch gekennzeichnet, daß der Zusammenstoßfühler Elemente (35,36) umfaßt, welche die Bewegung des an dem männlichen Anschluß (2) befestigten ersten Elements hinsichtlich des an dem Sicherheitsgurt (1) befestigten zweiten Elements, die durch die Handwirkung des Fahrers oder des Reisenden verursacht ist, beschränken, wobei die Elemente (35,36) eine vorbestimmte Schubfestigkeit aufweisen.

10. Sicherheitsgurt nach Anspruch 1 dadurch gekennzeichnet, daß die Zusammenstoßfühler aus einem zum Oszillieren fähigen System bestehen, wenn es durch eine Vibrationsbewegung betont wird, deren Intensität einen vorbestimmten Schwellwert übersteigt, wobei das System das Magnetventil (20) steuert, um das Signal zu senden, wenn die Pendelbewegungen an einer Stoßwelle liegen, die in die Karrosserie des Fahrzeuges infolgedessen eines Zusammenstoßes fortpflanzt.

## Revendications

1. Ceinture de sûreté combinée avec des sacs d'air, comportant une connexion mâle (2) qui peut être inserée dans une connexion femelle (48) attachée à la partie interne du plancher d'une voiture; la ceinture (1) se compose au moins d'une couche (5,6) de matériel approprié; la ceinture (1) est caractérisée en ce que la couche (5,6) enveloppe au moins un tuyau (8) qui s'étend longitudinalement dans la partie interne de la couche (5,6) et qui relie une bouteille pour le gaz comprimé (37) à une pluralité de sacs d'air (4,4',4''); une pluralité de logements (3) pour les sacs d'air (4,4',4'') adhère au côte de la ceinture (1) qui fait face à la partie externe du passager et/ou du conducteur; chacun des logements (3) présente une paroi avec basse résistance méchanique (7) à travers la quelle les sacs d'air (4,4',4'') dépassent une fois gonflés; en plus, des detecteurs d'impact sont pourvus pour détecter un impact de la voiture, les detecteurs détectent un impact frontal ou transversal ou une collision d'avant-à-arrière de la voiture; les detecteurs contrôlent des contacts électriques pour envoyer un signal à une èlectrovanne (20) afin d'agir sur la soupape de sortie de la bouteille (37) contenant le gaz comprimé à envoyer aux sacs d'air (4,4',4'').

2. Ceinture de sûreté selon la revendication 1, caractérisée en ce que un premier sac d'air (4 '), qui s'ouvre dans la piece frontale de la ceinture (1), est alimenté par un premier tuyau (8) à travers de premiers tuyaux de raccord (9); des deuxièmes sacs d'air (4'') sont pourvus, qui s'ouvrent dans les pièces transversales de la ceinture (1) et sont alimentés par un deuxième tuyau (8') à travers de deuxièmes tuyaux de raccord (9 ').

3. Ceinture de sûreté selon la revendication 2, caractérisée en ce que les deuxièmes sacs d'air (4'') sont équipés des soupapes de trop-plein (10) qui dégonflent partiellement les deuxièmes sacs d'air (4'') quelques instant après l'impact de sorte que le conducteur puisse voir la route et contrôler la guide.

4. Ceinture de sûreté selon la revendication 1, caractérisée en ce que les detecteurs d'impact se composent d'une masse à inertie qui agit sur un des contacts électriques pour envoyer le signal à l'èlectrovanne (20) quand la voiture subit une accélération dûe à un accident.

5. Ceinture de sûreté selon la revendication 4, caractérisée en ce que la masse à inertie se compose d'une sphère lourde (11) qui est tenue dans une entaille (22) ed qui glisse dans une cannelure (12) qui définit la direction (D) du mouvement de la sphère (11); deux plats élastiques en métal (18.19) sont pourvus pour fermer le circuit qui relie la batterie (17) à l'èlectrovanne (20), quand la sphère (11), soumise à une force iniertial pendant un accident, sort de l'entaille (22) et est poussée vers le premier plat (19) afin d'obtenir le contact entre le deuxième plat (18) et le premier plat (19).

6. Ceinture de sûreté selon la revendication 4, caractérisée en ce que la masse à inertie comprend le corps du conducteur et/ou du passager, qui est tenu par la ceinture (1) sur le siège de la voiture; pendant un impact le corps soumet la ceinture (1) à une contrainte avec d'une force de traction (T) qui agit sur un detecteur d'impact afin d'envoyer le signal à l'èlectrovanne (20); le detecteur d'impact comprend un premier élément solidaire à la connexion mâle(2) et un deuxième élément solidaire à la ceinture (1); le premier élément se déplace relativement au deuxième quand les deux éléments sont pressés par la force (T) afin d'agir sur les contacts électriques qui ferment le circuit reliant la batterie (17) à l'èlectrovanne (20).

7. Ceinture de sûreté selon la revendication 6, caractérisée en ce que le deuxième élément solidaire à la ceinture (1) une fois soumis à une contrainte par la force (T) se détache du premier élément solidaire à la connexion mâle (2); un dispositif est pourvu qui envoie le signal à l'èlectrovanne quand le deuxième élément est détaché du premier élément.

8. Ceinture de sûreté selon la revendication 7, caractérisée en ce que le dispositif detecteur d'impact comporte une parenthése (49) de connexion, qui se déform quand la ceinture (1) est pressée par la force (T), et un élément qui détecte la déformation; cet élément se compose d'aimants (53.53'), de boucliers (54,55) ou d'un circuit avec des éléments photo-sensibles qui contrôlent l'èlectrovanne (20).

9. Ceinture de sûreté selon la revendication 6, caractérisée en ce que le dispositif detecteur d'impact comporte des éléments (35.36) limitant le mouvement du premier élément solidaire à la connexion mâle (2) relativement au deuxième élément solidaire à la ceinture (1), quand le detecteur est soumis à une contrainte par la main du conducteur ou du passager; les élements (35.36) présentent une résistance préétablie à l'effort desséchant.

10. Ceinture de sûreté selon la revendication 1, caractérisée en ce que les detecteurs d'impact se composent d'un systéme qui oscille une fois soumis à une contrainte par un mouvement vibratoire, dont l'intensité excéde un seuil préétabli; le systéme contrôle l'èlectrovanne (20) afin d'envoyer le signal quand les oscillations sont dues à une vague du choc qui se propage dans la carrosserie de la voiture en conséquence de l'impact.
